# EUROPEAN PATENT APPLICATION

(11) **EP 3 767 846 A1**
(43) Date of publication of application: **20.01.2021**
(21) Application number: 19211095.5
(22) Date of filing: 25.11.2019
(51) Int. Cl.: H04H 60/80

(54) **DISPLAY APPARATUS AND CONTROLLING METHOD THEREOF**

(30) Priority: 16.07.2019 KR 20190085907
(71) Applicant: Samsung Electronics Co., Ltd., Gyeonggi-do 16677 (KR)
(72) Inventor: MOON, Sinwi, Gyeonggi-do (KR); WOO, Byungmin, Gyeonggi-do (KR); JUNG, Daehun, Gyeonggi-do (KR); HAN, Chanhee, Gyeonggi-do (KR)
(74) Representative: Appleyard Lees IP LLP

(57) **Abstract**

Disclosed is a display apparatus and a method of controlling the same. The display apparatus includes: a display; a communication interface; and a processor configured to: control the communication interface to communicate with an external sound device, and based on receiving, through the communication interface, at least one of an audio signal that is output from the external sound device or additional information related to the audio signal, control the display to display a graphic user interface (GUI) providing a visual effect that corresponds to the audio signal based on at least one of the audio signal or the additional information related to the audio signal, wherein the processor is configured to control the display to display the GUI on a partial region of the display based on device information of the external sound device.

## Description

### BACKGROUND

### 1. Field

The disclosure relates to a display apparatus and a controlling method thereof. More particularly, the disclosure relates to a display apparatus providing a visual effect corresponding to an audio signal and a controlling method thereof.

### 2. Description of Related Art

When outputting an audio signal, a graphical user interface (GUI) corresponding to the audio signal may be displayed on a display. The GUI displayed herein may provide various forms of visual effects in accordance with the audio signal being output, and the visual effect may be modified based on information of the audio signal.

In the related art, when outputting audio, a preset visual effect is provided to a user in the form of being displayed. However, the related art visual effect has been provided in consideration of only an audio signal, since information about a speaker through which an audio is outputted is not considered. The visual effect has been provided to the user in the same fashion, even if a speaker differs.

A device in which a sound output device and a display device are coupled may be necessary in order to provide the visual effect described above. Alternatively, a visual effect may be provided in a form of performing a communication connection by the display device and the external sound device.

When a display apparatus and an external sound device perform the communication connection, the external sound device may vary in size, type, or the like. However, since the visual effect provided to the user is the same, the user may not intuitively recognize the external sound device.

### SUMMARY

Provided is a display apparatus that provides a visual effect corresponding to an audio signal based on information of an external sound device and a controlling method thereof.

Additional aspects will be set forth in part in the description which follows and, in part, will be apparent from the description, or may be learned by practice of the presented embodiments.

In accordance with an aspect of the disclosure, a display apparatus includes: a display; a communication interface; and a processor configured to: control the communication interface to communicate with an external sound device, and based on receiving, through the communication interface, at least one of an audio signal that is output from the external sound device or additional information related to the audio signal, control the display to display a graphic user interface (GUI) providing a visual effect that corresponds to the audio signal based on at least one of the audio signal or the additional information related to the audio signal, wherein the processor is configured to control the display to display the GUI on a partial region of the display based on device information of the external sound device.

The device information may include at least one of size information of the external sound device or shape information of the external sound device.

The processor may be further configured to, based on an event to change a display mode of the GUI occurring, change a size of the partial region in which the GUI is displayed; and the event to change the display mode of the GUI may include at least one of an event in which a user command to change the display mode is input or an event in which information on a space in which the external sound device is arranged is changed.

The processor may be further configured to control the display to display the GUI with a shape variably determined based on at least one of a waveform of the received audio signal, a frequency of the received audio signal, or the additional information related to the audio signal; and the waveform of the received audio signal or the frequency of the audio signal may be obtained by analyzing the received audio signal.

The processor may be further configured to, based on an event to set an arrangement position of the external sound device, control the display to display a guide UI for guiding the arrangement position of the external sound device; and the guide UI may include a first guide image that corresponds to the device information of the external sound device.

The processor may be further configured to: identify the arrangement position of the external sound device based on sensing information received through the communication interface; and control the display to display a second guide image that corresponds to the device information of the external sound device on a partial region of the display that corresponds to the identified arrangement position.

The processor may be further configured to: based on a test audio signal that is output from the external sound device being received through at least one of an external microphone or an internal microphone, obtain information of a space in which the external sound device is arranged based on the output test audio signal and the received test audio signal; and control the display to display a GUI indicating that the space is being analyzed while the space information is obtained.

The processor may be further configured to: transmit the obtained space information to the external sound device through the communication interface; and based on output setting information being adjusted in the external sound device according to the space information, control the display to display a GUI indicating an adjustment state of the output setting information.

The processor may be further configured to control the display to display the GUI in an ambient mode to supply power to only some components, including the display and the communication interface, of the display apparatus.

The processor may be further configured to: control the communication interface to communicate with a plurality of external sound devices; and control the display to display a plurality of GUIs that respectively correspond to the plurality of external sound devices in different partial regions of the display based on device information of each of the plurality of external sound devices.

The processor may be further configured to: identify an arrangement position of the external sound device based on sensing information received through the communication interface; and control the display to display the GUI in the partial region of the display that corresponds to the identified arrangement position.

In accordance with another aspect of the disclosure, a controlling method of a display apparatus includes: receiving, from an external sound device, at least one of an audio signal output by the external sound device or additional information related to the audio signal; and displaying a graphic user interface (GUI) providing a visual effect that corresponds to the audio signal based on at least one of the audio signal or the additional information related to the audio signal, wherein the displaying the GUI includes displaying the GUI on a partial region of a display based on device information of the external sound device.

The device information may include at least one of size information of the external sound device or shape information of the external sound device.

The displaying the GUI may include, based on an event to change a display mode of the GUI occurring, changing a size of the partial region in which the GUI is displayed; and the event to change a display mode of the GUI may include at least one of an event in which a user command to change the display mode is input or an event in which information on a space in which the external sound device is arranged is changed.

The displaying the GUI may include displaying the GUI with a shape variably determined based on at least one of a waveform of the audio signal, a frequency of the audio signal, or the additional information related to the audio signal; and the waveform of the audio signal or the frequency of the audio signal may be acquired by analyzing the audio signal.

The method may further include, based on an event to set an arrangement position of the external sound device, displaying a guide UI for guiding the arrangement position of the external sound device, wherein the guide UI may include a first guide image that corresponds to the device information of the external sound device.

The displaying the guide UI may include identifying the arrangement position of the external sound device based on sensing information received through the communication interface, and displaying a second guide image that corresponds to the device information of the external sound device on a partial region of the display that corresponds to the identified arrangement position.

The method may further include: based on a test audio signal that is output from the external sound device being received through at least one of an external microphone or an internal microphone of the display apparatus, obtaining information of a space in which the external sound device is arranged based on the output test audio signal and the received test audio signal; and displaying a GUI indicating that the space is being analyzed while the space information is obtained.

The method may further include: transmitting the obtained space information to the external sound device; and based on output setting information being adjusted in the external sound device according to the space information, displaying a GUI indicating an adjustment state of the output setting information.

The displaying the GUI may include displaying the GUI in an ambient mode to supply power to only some components, including the display and a communication interface, of the display apparatus.

In accordance with another aspect of the disclosure, a non-transitory computer-readable recording medium has recorded thereon at least one instruction executable by a processor to perform a controlling method of a display apparatus, the method including: receiving, from an external sound device, at least one of an audio signal output by the external sound device or additional information related to the audio signal; and displaying a graphic user interface (GUI) providing a visual effect that corresponds to the audio signal based on at least one of the audio signal or the additional information related to the audio signal, wherein the displaying the GUI includes displaying the GUI on a partial region of a display based on device information of the external sound device.

The device information may include at least one of size information of the external sound device or shape information of the external sound device.

The displaying the GUI may include, based on an event to change a display mode of the GUI occurring, changing a size of the partial region in which the GUI is displayed; and the event to change a display mode of the GUI may include at least one of an event in which a user command to change the display mode is input or an event in which information on a space in which the external sound device is arranged is changed.

The displaying the GUI may include displaying the GUI with a shape variably determined based on at least one of a waveform of the audio signal, a frequency of the audio signal, or the additional information related to the audio signal; and the waveform of the audio signal or the frequency of the audio signal may be acquired by analyzing the audio signal.

The method may further include, based on an event to set an arrangement position of the external sound device, displaying a guide UI for guiding the arrangement position of the external sound device, wherein the guide UI may include a first guide image that corresponds to the device information of the external sound device.

In accordance with another aspect of the disclosure, a controlling method of a display apparatus includes: obtaining at least one of an audio signal or additional information related to the audio signal; and while the audio signal is output by an external sound device, displaying a graphic user interface (GUI) providing a visual effect that corresponds to the audio signal based on at least one of the audio signal or the additional information related to the audio signal, wherein the displaying the GUI includes displaying the GUI on a partial region of a display based on device information of the external sound device.

The device information may include at least one of size information of the external sound device or shape information of the external sound device.

The displaying the GUI may include, based on an event to change a display mode of the GUI occurring, changing a size of the partial region in which the GUI is displayed; and the event to change the display mode of the GUI may include at least one of an event in which a user command to change the display mode is input or an event in which information on a space in which the external sound device is arranged is changed.

The displaying the GUI may include displaying the GUI with a shape variably determined based on at least one of a waveform of the audio signal, a frequency of the audio signal, or the additional information related to the audio signal; and the waveform of the audio signal or the frequency of the audio signal may be acquired by analyzing the audio signal.

The method may further include: based on an event to set an arrangement position of the external sound device, displaying a guide UI for guiding the arrangement position of the external sound device, wherein the guide UI may include a first guide image that corresponds to the device information of the external sound device.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a view to describe a relation between a display apparatus and an external sound device according to an embodiment;
FIG. 2 is a block diagram illustrating a display apparatus according to an embodiment;
FIG. 3 is a block diagram to describe a specific configuration of a display apparatus;
FIG. 4 is a view to describe a GUI displayed on a display apparatus according to an embodiment;
FIG. 5 is a view to describe an operation that a display apparatus displays a GUI that changes according to the size of a space according to another embodiment;
FIG. 6 is a view to describe an operation that a display apparatus displays a GUI that changes according to the number of identified people according to another embodiment;
FIG. 7 is a view to describe an operation that a display apparatus displays a plurality of GUIs according to another embodiment;
FIG. 8 is a view to describe an embodiment in which only some GUIs are changed among a plurality of GUIs;
FIG. 9 is a view to describe a GUI that changes according to user setting;
FIG. 10 is a view to describe a GUI that changes according to the number of sound device;
FIG. 11 is a view to describe an embodiment in which a GUI displayed according to a movement of a sound device moves as well;
FIG. 12 is a view to describe an operation to display by a display apparatus a guide UI for guiding an arrangement position according to still another embodiment;
FIG. 13 is a view to describe an embodiment of requesting a specific operation to a user when an arrangement is completed according to the guide UI.
FIG. 14 is a view to describe an embodiment of displaying a virtual image on a display position corresponding to a position of the sound device;
FIG. 15 is a view to describe an embodiment of displaying a UI indicating that the display apparatus is performing the space analysis operation according to still another embodiment;
FIG. 16 is a view to describe a detailed setting of the sound device;
FIG. 17 is a flowchart to describe an operation of receiving a test audio signal and space analysis according to an embodiment;
FIG. 18 is a flowchart to describe an operation of receiving a test audio signal and space analysis according to another embodiment;
FIG. 19 is a flowchart to describe an operation of receiving a test audio signal and space analysis according to still another embodiment; and
FIG. 20 is a flowchart illustrating a controlling method of a display apparatus according to an embodiment.

### DETAILED DESCRIPTION

The disclosure will be described in greater detail with reference to the attached drawings.

The terms used in the present specification and the claims are general terms identified in consideration of the functions of the various embodiments of the disclosure. However, these terms may vary depending on intention, legal or technical interpretation, emergence of new technologies, and the like of those skilled in the related art. Also, there may be some terms arbitrarily identified by an applicant. Unless there is a specific definition of a term, the term may be construed based on the overall contents and technological common sense of those skilled in the related art.

Expressions such as "have," "may have," "include," "may include" or the like represent presence of a corresponding feature (for example, components such as numbers, functions, operations, or parts) and do not exclude the presence of additional features.

Expressions such as "at least one of A or B" and "at least one of A and B" should be understood to represent "A," "B" or "A and B."

As used herein, the terms "first," "second," or the like may identify corresponding components, regardless of importance of order, and are used to distinguish a component from another without limiting the components.

In addition, a description that one element (e.g., a first element) is "(operatively or communicatively) coupled with/to" or "connected to" another element (e.g., a second element) should be interpreted to include both the case that the one element is directly coupled to the other element, and the case that the one element is coupled to the another element through still another element (e.g., a third element).

A singular expression includes a plural expression, unless otherwise specified. It is to be understood that the terms such as "comprise" or "consist of" are used herein to designate a presence of a characteristic, number, step, operation, element, component, or a combination thereof, and not to preclude a presence or a possibility of adding one or more of other characteristics, numbers, steps, operations, elements, components or a combination thereof.

A term such as "module," "unit," "part," and so on is used to refer to an element that performs at least one function or operation, and such element may be implemented as hardware or software, or a combination of hardware and software. Further, other than when each of a plurality of "modules," "units," "parts," and the like must be realized in an individual hardware, the components may be integrated in at least one module or chip and be realized in at least one processor.

In the following description, a term user may refer to a person using an electronic device or a device (for example, an artificial intelligence electronic device) using an electronic device.

Hereinafter, embodiments will be described in detail with reference to the accompanying drawings.

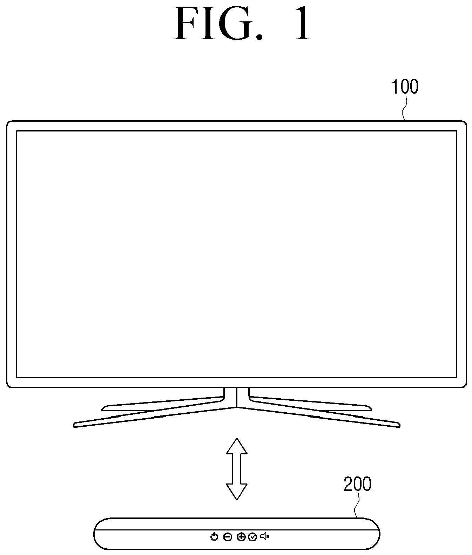

FIG. 1 is a view to describe a relation between a display apparatus 100 and an external sound device 200 according to an embodiment.

The display apparatus 100 may refer to an electronic device that includes a display 110. The display apparatus 100 according to various embodiments may include, for example, at least one of a smartphone, a tablet personal computer (PC), a mobile phone, a desktop PC, a laptop PC, a personal digital assistant (PDA), a portable multimedia player (PMP), an MP3 player, etc. In some embodiments, the display apparatus 100 may include at least one of, for example, a television, a digital video disk (DVD) player, a media box (for example, SAMSUNG HOMESYNC™, APPLE TV™, or GOOGLE TV™).

An external sound device 200 may refer to an electronic device that outputs an audio signal. The external sound device 200 may be an acoustic output device and may communicate with an external device wirelessly or by wire. Hereinbelow, it is described that the external device corresponds to the display apparatus 100.

According to an embodiment, the external sound device 200 may refer to an exterior speaker (exterior acoustic output device), and may be implemented as a sound bar (or an artificial intelligence (Al) sound bar) type. According to another embodiment, the external sound device 200 may be implemented as various types of devices capable of outputting an audio signal, such as an audio device, a user terminal device, a sound bar, a room speaker, a headphone, an earphone, or the like. For example, the external sound device 200 may be implemented as any device that includes at least one speaker unit. Here, the speaker unit has a function to convert an electric pulse to sound waves, and may be implemented as dynamic a type that is classified according to a principle and a method of converting an electric signal into a sound wave. It is understood, however, that one or more other embodiments are not limited thereto, and the speaker unit may be implemented as an electrostatic type, a dielectric type, a magnetostrictive type, or the like, within the scope of the disclosure. If the external sound device 200 includes a plurality of speaker units, it is possible to reproduce a plurality of channels respectively, such as a 2 channel, a 2.1 channel, a 3 channel, a 3.1 channel, a 5.1 channel, a 7.1 channel, etc. For example, the plurality of speaker units may include a center C channel speaker, a left L channel speaker, and a right R channel speaker.

The display apparatus 100 described above may be communicatively connected to the external sound device 200 by a preset communication method (e.g., Bluetooth, WiFi, etc.). A state in which the display apparatus 100 and the external sound device 200 are in communication may mean a paired state. When the display apparatus 100 and the external sound device 200 are paired with each other, the display apparatus 100 and the external sound device 200 may transmit and receive data according to a preset communication method.

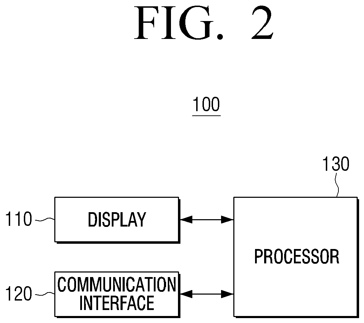

FIG. 2 is a block diagram illustrating a display apparatus according to an embodiment.

Referring to FIG. 2, the display apparatus 100 may include a display 110 and a communication interface 120.

The display 110 includes a display panel to output an image. The display panel may be implemented as various types of panels such as a liquid crystal display (LCD) panel, organic light emitting diodes (OLED) display panel, a plasma display panel (PDP), and the like. A driving circuit of the display panel can be implemented using one or more of an a-Si thin film transistor (TFT), a low temperature poly silicon (LTPS) TFT, an organic TFT (OTFT), and a backlight. Further, the display may be implemented as at least one of a touch screen coupled with a touch sensor, a flexible display, a three-dimensional (3D) display, or the like.

According to an embodiment, the display 110 may include not only a display panel to output an image but also a bezel that houses a display panel. In particular, the bezel according to an embodiment may include a touch sensor for sensing a user interaction.

The communication interface 120 may receive an audio content including an audio signal. For example, the communication interface 120 may receive an audio content including an audio signal by streaming or downloading from an external device (for example, a source device), an external storage medium (for example, a universal serial bus (USB) device), an external server (for example, a web server, etc.) through communication methods such as an access point (AP)-based Wi-Fi (wireless LAN network), Bluetooth, Zigbee, wired/wireless local area network (LAN), wide area network (WAN), Ethernet, IEEE 1394, high definition multimedia interface (HDMI), universal serial bus (USB), mobile high-definition link (MHL), advanced encryption standard (AES)/European broadcasting union (EBU), optical, coaxial, or the like.

The audio signal may be a digital audio signal. The digital audio signal is obtained by making or converting an analog signal into data, and this data is determined to use a constant transmission format by a communication protocol. Audio signals are not necessarily limited to digital audio signals and may be implemented in various forms.

The processor 130 (e.g., at least one processor) may perform overall control operations of the display apparatus 100. To be specific, the processor 130 plays a role to control overall operations of the display apparatus 100.

The processor 130 according to an embodiment may be implemented with at least one of a digital signal processor (DSP), a microprocessor, and a time controller (TCON) which process a digital image signal, but embodiments are not limited thereto. The processor 130 may include at least one of a central processing unit (CPU), a micro controller unit (MCU), a micro processing unit (MPU), a controller, an application processor (AP), a communication processor (CP), and an advanced reduced instruction set computing (RISC) machine (ARM) processor or may be defined as a corresponding term. The processor 130 may be implemented in a system on chip (SoC) type or a large scale integration (LSI) type in which a processing algorithm is built therein or in a field programmable gate array (FPGA) type. The processor 140 may perform various functions by executing computer executable instructions stored in the memory 120.

The processor 130 may control the communication interface 120 to communicate with the external sound device 200. Here, the processor 130 may use a wired or wireless communication method to communicate with the external sound device 200, and a predetermined communication method may be preconfigured. Hereinbelow, it is assumed that the display apparatus 100 and the external sound device 200 use a wireless communication method, although it is understood that one or more other embodiments are not so limited.

When the processor 130 identifies that at least one of the audio signal output from the external sound device 200 or additional information related to the audio signal output from the external sound device 200 is received through the communication interface 120, the processor 130 controls the display 110 to display a graphical user interface (GUI) providing a visual effect corresponding to the audio signal based on at least one of the received audio signal or additional information related to the audio signal. The processor 130 may display the GUI on a portion of the display 110 based on the device information of the external sound device 200.

Here, the GUI may be a user interface (Ul) of various formats that are displayed at the same time with output of the audio signal.

According to an embodiment, the GUI may refer to a UI that changes to correspond to the audio signal that is output (reproduced) by the external sound device 200 in real-time based on at least one of a data type, waveform, frequency, amplitude, or the like, of the audio signal. Providing a visual effect corresponding to the audio signal may refer to providing a GUI that changes in real time based on the audio signal being reproduced. For example, the GUI may be at least one of a visual effect image corresponding to the audio signal, sound visualization (or audio visualization), audio visual effect or sound spectrum (or audio spectrum).

According to another embodiment, the GUI may be a UI that displays additional information related to an audio signal output from the external sound device 200. Here, the additional information may mean various information related to the audio signal. The additional information may include at least one of information of a file format (file extension), subject (title), author (file creator), composer, playback time, and thumbnail image of the audio signal. Providing a visual effect corresponding to the audio signal may refer to displaying additional information related to the audio signal output from the external sound device 200 on the display 110.

The processor 130 may identify that at least one of the audio signal output from the external sound device 200 or additional information related to the audio signal output from the external sound device 200 is received from the external device. Here, the external device may be the external sound device 200 or an external server. The external server may store an audio content that includes an audio signal and additional information related to the audio signal.

According to an embodiment, the external sound device 200 may receive audio content from a terminal device. For example, it is assumed that a user gives a control command to play a specific song using a terminal device (e.g., a smartphone, a PC, or the like). Here, the terminal device may transmit the audio signal (additionally including additional information related to an audio signal for some cases) for the specific song to the external sound device 200. The external sound device 200 may output the audio signal received from the terminal device, and transmit at least one of the audio signal output from the external sound device 200 or additional information related to the audio signal output from the external sound device 200 to the display apparatus 100. The display apparatus may display the GUI based on at least one of the audio signal received from the external sound device 200 or additional information related to the audio signal received from the external sound device 200. Here, in order to output sound from the external sound device 200, the terminal device may have to transmit the audio signal to the external sound device 200. However, if the display apparatus 100 determines to generate (provide or display) only the GUI for displaying the additional information, the external sound device 200 may not transmit the audio signal to the display apparatus 100.

According to another embodiment, the external sound device 200 may receive an audio signal from the display apparatus 100. The display apparatus 100 may receive audio content from an external server, and the display apparatus 100 may transmit an audio signal to the external sound device 200 to output an audio signal included in the audio content. The display apparatus 100 may display a GUI based on at least one of audio signals received from an external server or additional information related to audio signals received from an external server.

The processor 130 may display the GUI on a partial region of the display based on the device information of the external sound device 200.

Here, the device information may include at least one of size information of the external sound device 200 or shape information of the external sound device 200. The processor 130 may display the GUI based on at least one of the size information of the external sound device 200 or the shape information of the external sound device 200. For example, the processor 130 may display the GUI that is the same as at least one of the size or the shape of the external sound device 200.

Here, the size information may be information of at least one of width, length, and depth (or height). The processor 130 may provide the GUI using information of at least one of the width, the length, and the depth (or height) of the external sound device 200. Here, the information on at least one of the width, the length, and the depth (or height) may be represented as at least one of an x-axis length, a y-axis length, and a z-axis length. The processor 130 may display the GUI having the same size as at least one of the size (width, length, and/or depth (or height)) of the external sound device 200 on the display 110. For example, the processor 130 may display the GUI having the same width size as the width size of the external sound device 200.

In addition, the shape information may mean at least one of a shape and a form. The GUI having the same shape as the external sound device 200 may be displayed. Meanwhile, in the above description, it has been described that the size information and the shape information are separate, but according to various embodiments, the shape information may be information analyzed and/or determined based on the size information.

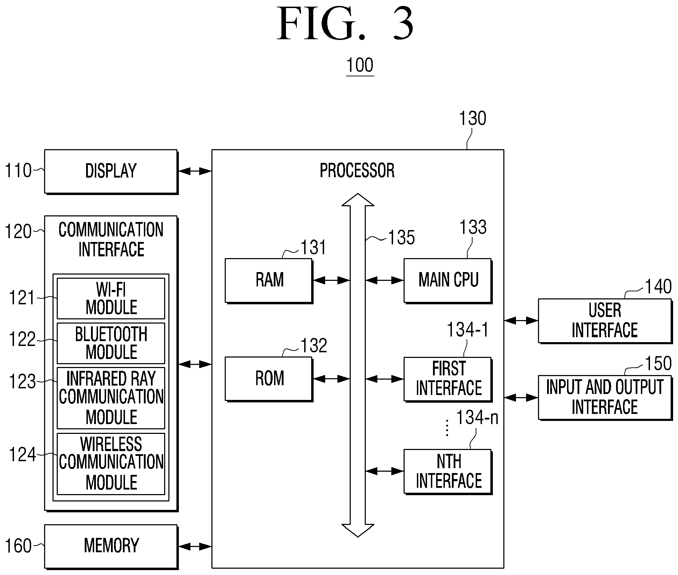

According to an embodiment, the processor 130 may prestore device information of the external sound device 200 in a memory 160 (see FIG. 3), and the processor 130 may directly receive the device information through the external server (transmitting the device information for the external sound device 200 from the external server) or the external sound device 200.

Meanwhile, the partial region may refer to a specific region of the entire screen of the display 110, not the entire screen of the display 110. Here, the specific region may be the lower center of the center of the display 110 as a default setting value, and may be changed depending on the type of the external sound device 200 or the current position of the external sound device 200 (a position identified by a separate sensor).

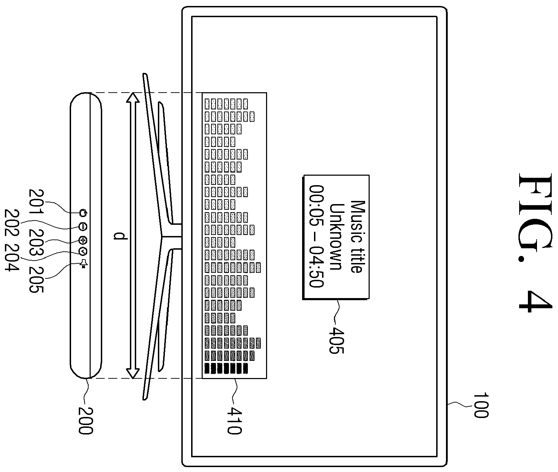

An embodiment of displaying the GUI having the same size as the width size of the external sound device 200 is specifically described below with reference to FIG. 4.

When (e.g., based on) an event occurs to change the display mode of the GUI, the processor 130 may change the size of the region in which the GUI is displayed. An event for changing the display mode of the GUI may include at least one of an event in which a user command to change the display mode is input or an event in which information about the space where the external sound device 200 is disposed is changed.

Here, changing the display mode may refer to changing at least one of a type, a format, or a size of the GUI. The processor 130 may perform a space analysis for each predetermined cycle and change the GUI using a result that is obtained through the space analysis.

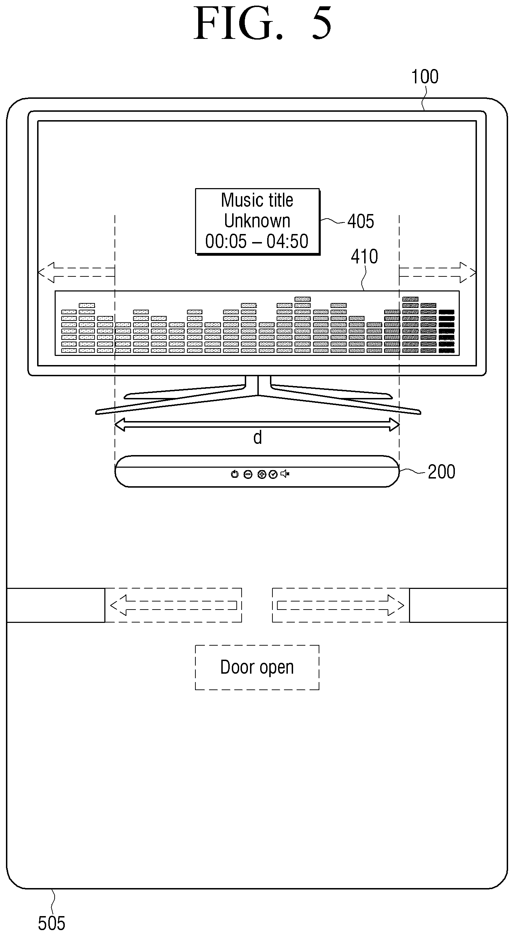

According to an embodiment, the processor 130 may obtain the width (or size) of a peripheral space through space analysis. Here, the peripheral space may refer to a space where the display apparatus 100 or the external sound device 200 is disposed. The processor 130 may change the GUI when (e.g., based on) the size of the peripheral space is changed. For example, if the processor 130 identifies that the size of the peripheral space is increased, the horizontal size of the GUI may be increased. An embodiment of changing the GUI according to the size of the peripheral space is described in detail below with reference to FIG. 5.

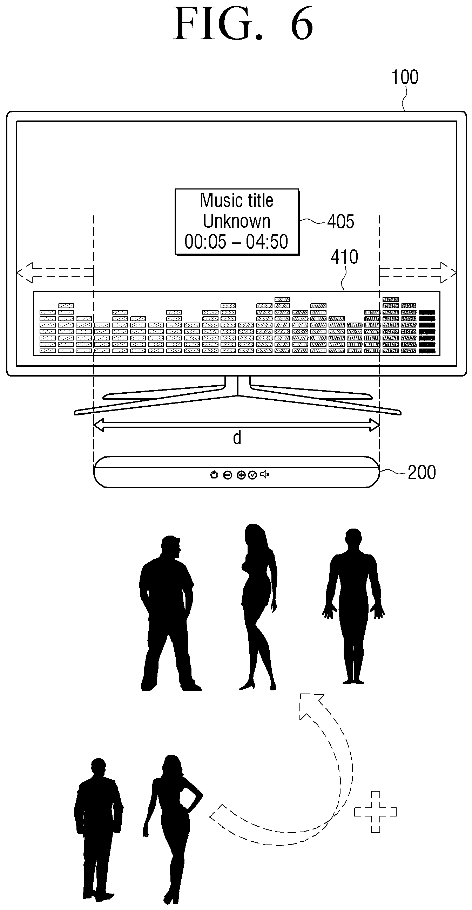

According to still another embodiment, the processor 130 may identify the number of people present in the peripheral space through space analysis. The processor 130 may change the GUI when (e.g., based on) the number of people present in the peripheral space is changed. For example, when the processor 130 identifies that the number of people present in the peripheral space is changed from three to five, the horizontal size of the GUI may be increased. An embodiment of changing the GUI according to the number of people present in the peripheral space is described in detail below with reference to FIG. 6.

In addition, the processor 130 may control the display 110 to display a different type of GUI based on at least one of a waveform of the received audio signal, a frequency of the received audio signal, or additional information related to the audio signal. The waveform of the audio signal or the frequency of the audio signal may be obtained by analyzing the received audio signal.

The processor 130 may determine (identify) which GUI will be provided (displayed).

According to an embodiment, the processor 130 may obtain at least one of the waveform of the audio signal or the frequency of the audio signal by analyzing the audio signal. The processor 130 may identify which GUI will be provided based on the obtained information.

According to another embodiment, the processor 130 may use additional information associated with the audio signal to determine which GUI to provide. For example, the processor 130 may determine the GUI based on the kinds (or type) of the audio signal included in the additional information. If the processor 130 identifies that the audio signal is a recording file, the processor 130 may provide a first GUI suitable for the recording file. If the processor identifies that the audio signal is a music file, the processor 130 may provide a second GUI suitable for the music file. Here, the first GUI and the second GUI may be different UIs.

Below, embodiments of providing different GUIs are described with reference to FIGS. 4, 7, and 9.

In addition, when an event for setting an arrangement position of the external sound device 200 occurs, the processor 130 may control the display 110 to display a guide UI for guiding the arrangement position of the external sound device 200 in a partial region of the display. The guide UI may include a first guide image corresponding to device information of the external sound device 200.

The arrangement position may refer to a suitable recommended position at which the external sound device 200 is installed, and the arrangement position may be different depending on the type of the external sound device 200. In general, the arrangement position may vary depending on the number of the external sound devices 200. The arrangement position may refer to a position suitable for installing the external sound device 200 and may refer a position where the external sound device 200 is currently disposed. In order to easily distinguish the foregoing, a position suitable for installing the external sound device 200 may be described as a recommended position, and a current position where the external sound device 200 is disposed may be described as a current position.

According to an embodiment, if there is one external sound device 200, the lower center of the display apparatus 100 may be a recommended position.

According to another embodiment, when there is a plurality of external sound devices 200, there may be a plurality of arrangement positions. When there are two external sound devices 200, a left lower portion and a right lower portion may be recommended positions.

The arrangement position (or recommendation position or recommendation arrangement position) may correspond to the external sound device 200, and the processor 130 may pre-store information about the arrangement position (recommended position). For example, the processor 130 may store the first recommendation position corresponding to the first speaker and the second recommendation position corresponding to the second speaker in the memory 160. The recommended position may be updated by receiving information from the external server at predetermined intervals. Meanwhile, the information on the recommended position may be implemented in a form that the external sound device 200 directly transmits the information to the display apparatus 100.

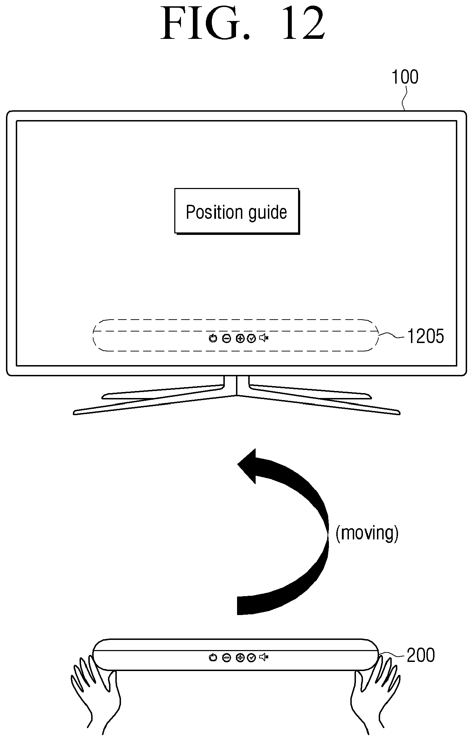

The description regarding the arrangement position is described below with reference to FIGS. 12 to 14.

Here, the processor 130 may identify the arrangement position of the external sound device 200 based on the sensing information received through the communication interface 120, and control the display 110 to display the second guide image corresponding to the device information of the external sound device 200 on a partial region of the display 110 corresponding to the identified arrangement position.

The processor 130 may identify the current position of the external sound device 200 using a sensor included in the display apparatus 100. According to another embodiment, the current position of the external sound device 200 may be identified by the external sound device 200 that transmits sensing information and by the display apparatus 100 that receives the sensing information.

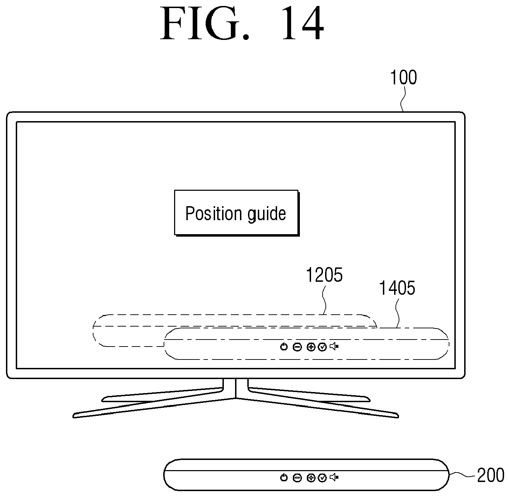

An embodiment of providing a guide UI according to a current position of the external sound device 200 will be described in FIG. 14.

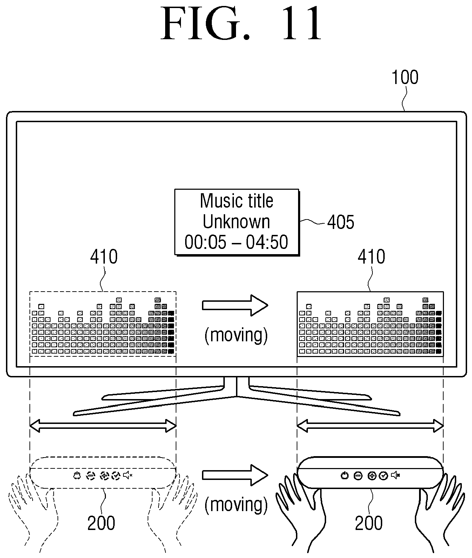

An embodiment of providing a GUI according to a current position of the external sound device 20 is described below with reference to FIG. 11.

The processor 130 may control so that a space analysis is performed by the display apparatus 100 or the external sound device 200.

The space analysis may refer to analyzing characteristics of the peripheral space in which the display apparatus 100 and/or the external sound device 200 is installed. The characteristics of the peripheral space may refer to information related to the space that may be considered in outputting the sound. For example, the characteristic of the peripheral space may be space information, and the size of the space, the structure of the space, the number of people in the space, or the like.

In order to perform the space analysis (space information analysis), a test audio signal may be used. The test audio signal may refer to a specific signal that is output for the space analysis and may correspond to a non-audible frequency range.

When a test audio signal is output from an output device (a device that outputs a test audio signal) to perform space analysis, a receiving device (the device that receives the output test audio signal) may receive the test audio signal that is reflected (refracted or diffracted) by a wall or structure of the space.

The receiving device including a microphone may receive the output test audio signal itself and may receive the reflected (or refracted or diffracted) test audio signal. The display apparatus 100 may consider the output time and the reception time of the test audio signal and may consider the waveform or amplitude of the received test audio signal to determine whether the test audio signal is a reflected test audio signal. The receiving device may distinguish the test audio signal output from the speaker from the reflected test audio signal by analyzing various pieces of information of the received test audio signal, and the receiving device may perform space analysis using the reflected test audio signal.

The output device and the receiving device may be the same device, or may be different devices from each other according to another embodiment. The output device and the receiving device may be distinguished by various embodiments as shown below.

As a first embodiment, the display apparatus 100 may output a test audio signal, and the display apparatus 100 may receive a reflected test audio signal.

As a second embodiment, the display apparatus 100 may output a test audio signal, and the external sound device 200 may receive a reflected test audio signal.

As a third embodiment, the external sound device 200 may output a test audio signal, and the externa sound device 200 may receive a reflected test audio signal.

As a fourth embodiment, the external sound device 200 may output a test audio signal, and the display apparatus 100 may receive the reflected test audio signal.

According to an one or more other embodiments, an external device may additionally be used.

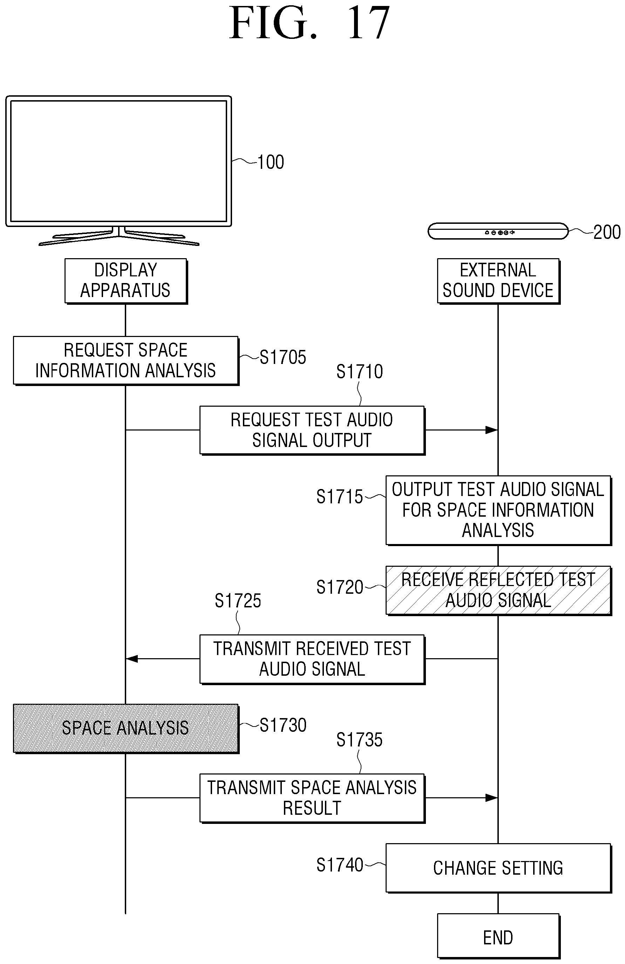

The receiving device may receive a reflected test audio signal and perform the space analysis. The receiving device may perform the space analysis in the external device by receiving the reflected test audio signal and transmitting the received information to the external device. FIGS. 17 to 19 illustrate, in part, the above-described embodiment.

Meanwhile, when the test audio signal output from the external sound device 200 is received through at least one of an external microphone or an internal microphone, the processor 130, based on the output test audio signal and the received test audio signal, acquires the space information on which the external sound device 200 is disposed and controls the display 110 to display a GUI indicating that the space is being analyzed while acquiring the space information.

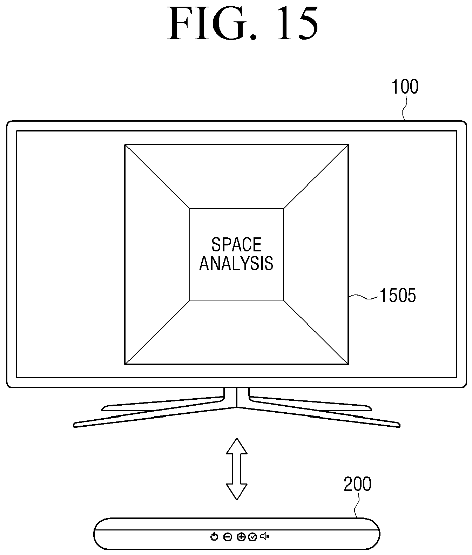

The GUI indicating that the space analysis is being conducted is described below with reference to FIG. 15.

Here, when the processor 130 transmits the acquired space information to the external sound device 200 through the communication interface 120, and the output setting information is adjusted based on the space information in the external sound device 200, the processor 130 may control the display 110 to display a GUI indicating an adjustment state of the output setting information.

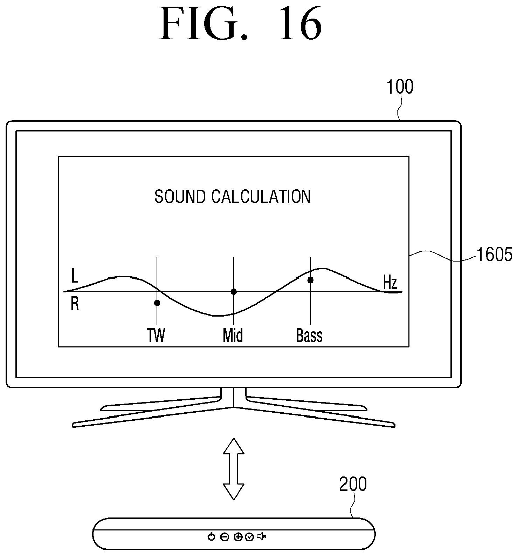

The GUI indicating an adjustment state of the output setting information is described in greater detail below with reference to FIG. 16.

The processor 130 may control the display 110 to display the GUI in a peripheral mode to supply power to only some components including the display and the communication interface 120.

The peripheral mode may refer to a mode in which the display apparatus 100 supplies power to only a minimum configuration necessary for displaying a GUI on the display 110. For example, the peripheral mode may mean that power may not be supplied to the component that receives the broadcast signal from the communication interface 120, and no power is supplied to the internal speaker to efficiently consume power.

The processor 130 may control the communication interface 120 to communicate with the plurality of external sound devices 200 and control the display 110 to display the GUI corresponding to each of the plurality of external sound devices 200 on some regions that are different from each other of the display 110, based on the device information of each of the plurality of external sound devices 200.

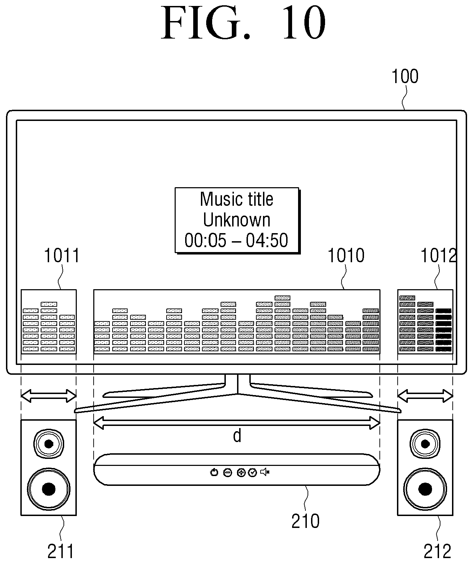

The plurality of external sound devices 200 is described below with reference to FIG. 10.

The processor 130 may identify the arrangement position of the external sound device 200 based on the sensing information received through the communication interface 120, and control the display 110 to display the GUI on a partial region of the display 110 corresponding to the identified arrangement position.

The arrangement position may refer to a current position of the external sound device 200, and the processor 130 may display the GUI at a position corresponding to the identified current position of the external sound device 200. A specific description is provided below with reference to FIG. 11.

Since the display apparatus 100 provides a GUI using all or part of the display 110, the display apparatus 100 may expand the user's hearing and visual experience. When the external sound device 200 is installed for the first time, the user may obtain easy and accurate information according to the visual guide UI displayed on the display 110, in addition to the voice guide. In addition, when the GUI is displayed corresponding to the reproduced audio signal, a GUI suitable for the atmosphere of the audio signal may be provided, and a user may select a desired GUI. The UI provided by the display apparatus 100 may deliver a clear feedback and an optimal sound tuning process to the user.

The display apparatus 100 may express the visual sound effect as the GUI using only a part of the display 110 and may expand the sound experience of a user.

Through a new interaction between the display apparatus 100 and the external sound device 200 according to an embodiment, a more abundant sound experience may be provided.

Meanwhile, the display apparatus 100 may display a process of initial setting (product positioning guide, space analysis, sound unit setting) of the external sound device 200 on the display 110. In addition, the display apparatus 100 may display at least one of visual sound effects or detailed information of music (e.g., album jacket image, song title, song playing time, singer, etc.) corresponding to an audio signal output from the external sound device 200 on a part of the display 110. This allows the user to view images in addition to sound, thereby expanding the sound experience.

A simple configuration of the display apparatus 100 has been described with reference to FIG. 2, but in implementation, various configurations and components may be additionally included. This is described below with reference to FIG. 3.

FIG. 3 is a block diagram to describe a specific configuration of a display apparatus 100 of FIG. 1.

Referring to FIG. 3, the display apparatus 100 may include a display 110, a communication interface 120, a processor 130, a user interface 140, an input and output interface 150, and a memory 160.

The display 110, the communication interface 120, and the processor 130 are the same as or substantially similar to those illustrated in FIG. 2, and redundant descriptions thereof may not be provided below.

The communication interface 120 may communicate with other external devices using various types of communication methods. The communication interface 120 includes at least one of a Wi-Fi module 121, a Bluetooth module 122, an infrared communication module 123, a wireless communication module 124, or the like. Each communication module may be implemented as or include at least one hardware chip.

The processor 130 may communicate with various external devices using the communication interface 120. According to an embodiment, the external device may refer to the external sound device 200.

According to another embodiment, the external device may include a display device such as a TV, an image processing device such as a set-top box, an external server, a control device such as a remote control, an audio output device such as a Bluetooth speaker, a lighting device, a smart cleaner, a home appliance such as a smart refrigerator, a server such as an Internet of things (IOT) home manager, or the like.

The Wi-Fi module 121 and the Bluetooth module 122 perform communication using a Wi-Fi method and a Bluetooth method, respectively. When using the Wi-Fi module 121 or the Bluetooth module 122, various connection information such as a service set identifier (SSID) and a session key may be transmitted and received first, and communication information may be transmitted after communication connection.

The infrared ray communication module 123 performs communication according to infrared data association (IrDA) technology that transmits data wireless to a local area using infrared ray between visible rays and millimeter waves.

The wireless communication module 124 refers to a module performing communication according to various communication standards such as Zigbee, 3^{rd} generation (3G), 3^{rd} generation partnership project (3GPP), long term evolution (LTE), LTE advanced (LTE-A), 4^{th} generation (4G), 5^{th} generation (5G), or the like, in addition to the communication methods as described above.

The communication interface 120 may include at least one of a local area network (LAN) module, Ethernet module, or wired communication module performing communication using a pair cable, a coaxial cable, an optical cable, or the like.

According to an embodiment, the communication interface 120 may use the same communication module (for example, Wi-Fi module) for communicating with an external device such as a remote controller and an external server.

According to another example, the communication interface 120 may use a different communication module (for example, a Wi-Fi module) to communicate with an external server and an external device such as a remote controller. For example, the communication interface 120 may use at least one of an Ethernet module or a Wi-Fi module to communicate with the external server, and may use a Bluetooth (BT) module to communicate with an external device such as a remote controller. However, this is only an example and the communication interface 120 may use at least one communication module among various communication modules when communicating with a plurality of external devices or external server in other implementations.

The electronic apparatus 100 may further include at least one of a tuner and a demodulator, according to an implementation example.

The tuner may receive a radio frequency (RF) broadcast signal by tuning a channel selected by a user or all the prestored channels, among the RF broadcast signal received through an antenna.

The demodulator may receive and demodulate a digital intermediate frequency (DIF) signal converted by the tuner and perform channel decoding, or the like.

The processor 130 controls overall operations of the electronic apparatus 100 using various programs stored in the memory 160.

To be specific, the processor 130 includes at least one of a random access memory (RAM) 131, a read-only memory (ROM) 132, a main central processing unit (CPU) 133, a first to n^{th} interfaces 134-1∼134-n, and a bus 135.

The RAM 131, the ROM 132, the main CPU 133, the first to n^{th} interfaces 134-1 to 134-n, or the like, may be interconnected through the bus 135.

The ROM 132 stores one or more instructions for booting the system and the like. When the turn-on instruction is input and power is supplied, the CPU 133 copies the OS stored in the memory 160 to the RAM 131 according to the stored one or more instructions in the ROM 132, and executes the OS to boot the system. When the booting is completed, the CPU 133 copies various application programs stored in the memory 160 to the RAM 131, executes the application program copied to the RAM 131, and performs various operations.

The main CPU 133 accesses the memory 160 and performs booting using an operating system (OS) stored in the memory 160, and performs various operations using various programs, contents data, or the like, stored in the memory 160.

The first to n^{th} interface 134-1 to 134-n are connected to the various elements described above. One of the interfaces may be a network interface connected to an external device through the network.

The processor 130 may perform a graphic processing function (e.g., video processing function). For example, the processor 130 may generate a screen including various objects such as icons, images, text, and the like. Here, a calculator may calculate an attribute value such as a coordinate value, a shape, a size, and a color to be displayed by each object according to the layout of the screen based on the received control command. A renderer may generate display screens of various layouts including objects based on the attribute value calculated by the calculator. The processor 130 may perform various image processing such as at least one of decoding, scaling, noise filtering, frame rate conversion, resolution conversion, or the like, for the video data.

The processor 130 may perform processing of audio data. Specifically, the processor 130 may perform various audio processing such as at least one of decoding, amplifying, noise filtering, and the like, on the audio data.

The user interface 140 may be implemented using a device such as at least one of a button, a touch pad, a mouse, a keyboard, or a touch screen capable of performing the above-described display function and operation input function. Here, the button may be various types of buttons such as at least one of a mechanical button, a touch pad, a wheel, or the like, formed in an arbitrary region such as at least one of a front portion, a side portion, a back portion, or the like, of the outer surface of the main body of the electronic apparatus 100.

The input and output interface 150 may be at least one of a high-definition multimedia interface (HDMI), mobile high-definition link (MHL), universal serial bus (USB), display port (DP), Thunderbolt, video graphics array (VGA) port, RGB port, d-subminiature (D-SUB), digital visual interface (DVI), and the like.

The input and output interface 150 may input or output at least one of an audio signal and a video signal.

In some embodiments, the input and output interface 150 may include a port for inputting or outputting only an audio signal or a video signal separately, or may be implemented as one port that inputs or outputs all the audio signals or video signals.

The memory 160 may be implemented as an internal memory such as a read-only memory (ROM) (for example, electrically erasable programmable read-only memory (EEPROM)) and a random-access memory (RAM) or a memory separate from the processor 130. In this case, the memory 160 may be implemented as at least one of a memory embedded within the electronic apparatus 100 or a memory detachable from the electronic apparatus 100 according to the usage of data storage. For example, the data for driving the electronic apparatus 100 may be stored in the memory embedded within the electronic apparatus 100, and the data for upscaling of the electronic apparatus 100 may be stored in the memory detachable from the electronic apparatus 100. A memory embedded in the electronic apparatus 100 may be implemented as at least one of a volatile memory such as a dynamic random access memory (DRAM), a static random access memory (SRAM), a synchronous dynamic random access memory (SDRAM), or a non-volatile memory (for example, one time programmable ROM (OTPROM), programmable ROM (PROM), erasable and programmable ROM (EPROM), electrically erasable and programmable ROM (EEPROM), mask ROM, flash ROM, a flash memory (for example, NAND flash or NOR flash), a hard disk drive (HDD) or a solid state drive (SSD). In the case of a memory detachably mounted to the electronic apparatus 100, the memory may be implemented as a memory card (for example, a compact flash (CF), secure digital (SD), micro secure digital (micro-SD), mini secure digital (mini-SD), extreme digital (xD), multi-media card (MMC), etc.), an external memory (for example, a universal serial bus (USB) memory) connectable to the USB port, or the like.

The electronic apparatus 100 may receive a user voice signal from an external device including a microphone. In this case, the received user voice signal may be a digital audio signal, or may be an analog audio signal. For example, the electronic apparatus 100 may receive a user voice signal through a wireless communication method such as Bluetooth or Wi-Fi. The external device may be implemented as a remote control device or a smartphone.

The electronic apparatus 100 may transmit the voice signal to the external server in order to recognize voice of the voice signal received from the external device.

A communication module for communicating with the external device and the external server may be implemented separately. For example, communication with the external device may be performed through the Bluetooth module 122, and communication with the external server may be performed through an Ethernet module or the Wi-Fi module 121.

A speaker may be an element to output various audio data, various alarm sounds, a voice message, or the like, which are processed by the input and output interface 150.

The electronic apparatus 100 may further include a microphone. The microphone is an element to receive a user voice or other sound and convert to audio data.

The microphone may receive the user voice in an active state. For example, the microphone may be integrally formed as an integral unit on at least one of an upper side, a front side direction, a side direction, or the like of the electronic apparatus 100. The microphone may include various configurations such as a microphone for collecting user voice in an analog format, an amplifier circuit for amplifying the collected user voice, an audio-to-digital (A/D) conversion circuit for sampling the amplified user voice to convert into a digital signal, a filter circuitry for removing a noise element from the converted digital signal, or the like.

FIG. 4 is a view to describe a GUI displayed on a display apparatus 100 according to an embodiment.

Referring to FIG. 4, the external sound device 200 may include at least one of a power button 201, an decrease ("-") volume adjustment button 202, an increase ("+") volume adjustment button 203, an enter, select, or OK button 204, and a mute button 205. Here, the external sound device 200 may include a button for performing various functions, in addition to the above buttons.

In addition, referring to FIG. 4, the display apparatus 100 may display a GUI corresponding to an audio signal output from the external sound device 200 on the display 110. Here, the GUI may be a UI 405 including information corresponding to an audio signal. The information corresponding to the audio signal may refer to information related to the type, title, reproduction time, and producer of the audio signal (in the case of music, singer, composer, and writer). In addition, the GUI may be or include a GUI 410 that provides a visual effect corresponding to the audio signal. For example, the information may refer to at least one of audio signal information, visual effects, sound visualization (or audio visualization), audio visual effect, and sound spectrum (or audio spectrum) according to the output of the audio signal. The GUI 410 including the visual effect may be a UI that changes according to time, and the display apparatus 100 may change the GUI 410 including the visual effect based on a change in an audio signal output from the external sound device 200.

The display apparatus 100 may control the display 110 to display a GUI 410 including the visual effect in the same size as (or scaled to) the external sound device 200 based on the prestored size information of the external sound device 200.

According to an embodiment, it is assumed that the horizontal size of the external sound device 200 is "d" (unit is omitted). The display apparatus 100 may store size information of the paired external sound device 200 in a memory, and the display apparatus 100 may provide the GUI 410 including a visual effect to the size of "d." Here, "d" may refer to at least one of the horizontal size or the vertical size of the GUI 410 including the visual effect. The display apparatus 100 may set and provide the horizontal size of the GUI 410 including the visual effect to "d" in consideration of the horizontal size of the external sound device 200. The vertical size may not be the same as the vertical size of the actual external sound device 200.

According to another embodiment, the display apparatus 100 may provide the GUI 410 including the visual effect in consideration of both the horizontal size and the vertical size of the external sound device 200. For example, it is assumed that the horizontal size of the external sound device 200 is "d" and the vertical size is "h." The display apparatus 100 may provide the GUI 410 including the visual effect having the horizontal size of "d" and the vertical size of "h."

According to still another embodiment, the display apparatus 100 may provide the GUI 400 including the visual effect considering only the vertical size.

The display apparatus 100 may provide the GUI 640 including all of three dimensional (3D) sizes of the external sound device 200. For example, the GUI 410 including the visual effect provided by the display apparatus 100 may have the same size as (or scaled to) the width, the length, and the height (or depth) of the external sound device 200.

The position in which the GUI 410 including the visual effect is displayed may vary depending on the external sound device 200. According to an embodiment, the display apparatus 100 may control the GUI 410 including the visual effect to be displayed at a preset position based on information about the external sound device 200. According to another embodiment, the display apparatus 100 may identify the position of the external sound device 200 and display the GUI 410 that includes the visual effect in a space that corresponds to the identified position. For example, if the display apparatus 100 identifies that the external sound device 200 is disposed to a lower center of the display apparatus 100, the display apparatus 100 may display the GUI 410 including the visual effect at the lower center of the display 110.

FIG. 5 is a view to describe an operation that a display apparatus displays a GUI that changes according to the size of a space according to another embodiment.

Referring to FIG. 5, the display apparatus 100 may provide at least one of a UI 405 including information corresponding to an audio signal and the GUI 410 including a visual effect corresponding to the audio signal. The display apparatus 100 may analyze the space in which the external sound device 200 is disposed (or the space in which the display apparatus 100 is installed). The space in which the external sound device 200 is disposed or the space in which the display apparatus 100 is installed will be referred to as a peripheral space 505.

The display apparatus 100 may perform an analysis on the peripheral space 505 to calculate the area of the peripheral space 505. In addition, the display apparatus 100 may measure the area of the peripheral space 505 in accordance with a preset time period, and may obtain the area of the peripheral space 505 over time. In addition, the display apparatus 100 may identify whether to change the size. The display apparatus 100 may change the size of the GUI 410 that includes a visual effect based on a change in the area of the peripheral space 505.

According to an embodiment, when (e.g., based on) the area of the peripheral space 505 increases, the display apparatus 100 may control the horizontal size of the GUI 410 including the visual effect to increase. In addition, when (e.g., based on) the area of the peripheral space 505 decreases, the display apparatus 100 may control the horizontal size of the GUI 410 including the visual effect to decrease. Here, the size of the GUI may refer to at least one of the horizontal size or vertical size.

According to still another embodiment, when the display apparatus 100 considers three-dimensional information, the display apparatus 100 may change at least one of the width, the length, and the height (or depth) of the GUI 410 including the visual effect.

The display apparatus 100 may provide the UI 405 including the information corresponding to the audio signal in the same size regardless of a change in the area of the peripheral space 505.

An operation of changing the GUI 410 including the visual effect according to a change in the area of the peripheral space 505 may have an effect of displaying a change in a space intuitively to a user.

FIG. 6 is a view to describe an operation that a display apparatus 100 displays a GUI that changes according to the number of identified people according to another embodiment.

The display apparatus 100 may identify the number of people present in the peripheral space 505. The display apparatus 100 may change the size of the GUI 410 including the visual effect based on the identified number of people. Here, the display apparatus 100 may identify the number of people present in the peripheral space 505 at predetermined time periods, and may identify the change in the number of people present in the peripheral space 505 accordingly. For example, when the display apparatus 100 identifies that there are three people in the peripheral space 505, the display apparatus 100 may provide the GUI 410 including a visual effect having the horizontal size of "d." In addition, it is assumed that two more people enter the peripheral space 505. Here, when the display apparatus 100 identifies that there are five people in the peripheral space 505, the display apparatus 100 may change the size of the GUI 410 including the visual effect to be larger than "d."

The operation to change the GUI 410 including the visual effect according to the number of people identified in the peripheral space 505 may have an effect of intuitively displaying a change in the number of people.

FIGS. 4 to 6 illustrate the GUI 405 including information corresponding to the audio signal and the GUI 410 including the visual effect. Here, the display apparatus 100 may provide a plurality of GUIs including the visual effect.

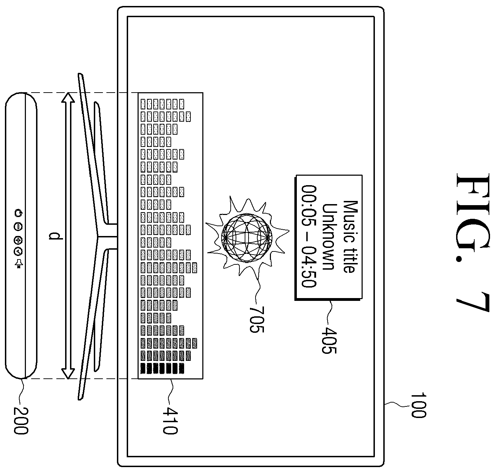

FIG. 7 is a view to describe an operation that a display apparatus 100 displays a plurality of GUIs 410 and 705 according to another embodiment.

Referring to FIG. 7, a plurality of GUIs 410 and 705 including the visual effect may be provided, and the plurality of GUIs 410 and 705 including the visual effect may have different formats. For example, the GUI 410 including the visual effect may be an audio spectrum shape and a GUI 705 including the visual effect may be a UI of a sphere shape.

When the display apparatus 100 displays a GUI including a plurality of visual effects, the display apparatus 100 may provide only one GUI among the GUI including the visual effects in the same size as that of the external sound device 200, and provide other GUIs in the preset size regardless of the size of the external sound device 200.

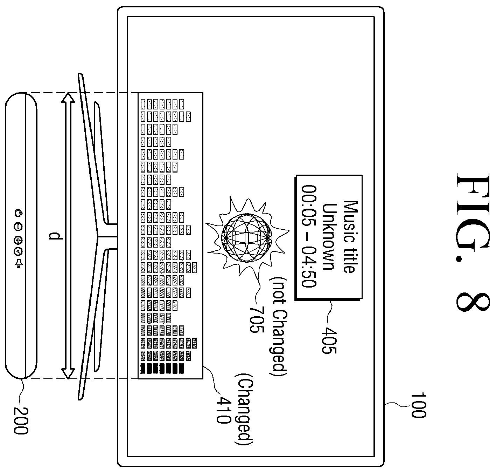

FIG. 8 is a view to describe an embodiment in which only some GUIs are changed among a plurality of GUIs.

The display apparatus 100 may analyze the peripheral space and identify information about the area of the peripheral space or the number of people present in the peripheral space. The display apparatus 100 may change the size of the GUI 410 including the visual effect according to the change in the area of the peripheral space or the number of people present in the peripheral space. Here, the display apparatus 100 may control not to change the size of only the GUI 410 among the GUIs 410 and 705 including the plurality of visual effects, and not to change the size of the remaining GUI 705. For example, suppose the area of the peripheral space has increased. If (e.g., based on) the display apparatus 100 identifies that the area of the peripheral space has increased, the display apparatus 100 may control to greatly change the size of the GUI 410 including the visual effect and not change the size of the GUI 705 including the visual effect.

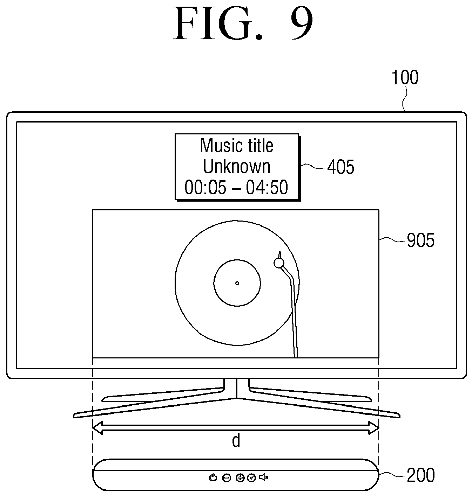

FIG. 9 is a view to describe a GUI that changes according to user setting.

Referring to FIG. 9, the display apparatus 100 may provide various GUIs based on the information corresponding to the audio signal. The information corresponding to the audio signal may include a type of an audio signal. The display apparatus 100 may provide different GUIs according to the information of the audio signal.

According to an embodiment, the display apparatus 100 may provide different GUIs according to a type of the audio signal. For example, when the audio signal is a voice, the display apparatus 100 may provide an image that a person utters a voice. In addition, when the audio signal is music, the display apparatus 100 may provide an image related to music.

According to another embodiment, the display apparatus 100 may provide different GUIs according to a production time of an audio signal or a release time of an audio signal (song). For example, the display apparatus 100 may provide an image 905 of the LP version when the audio signal is released between 1970 and 1990, and provide a CD-player image when the audio signal is released between 1990 and 2000. When the release timing of the audio signal is 2000 or later, an image of an mp3 file may be provided.

Meanwhile, according to still another embodiment, the display apparatus 100 may provide a preset image corresponding to the song of the audio signal. For example, the display apparatus 100 maps a song and a provided image and stores the mapping information a memory, and the display apparatus 100 may control to provide a mapped image based on information of an audio signal that is output through the external sound device 200. Here, the display apparatus 100 may store the mapping information in a memory inside the display apparatus 100 but may be implemented in a form of storing the mapping information in an external server.

FIG. 10 is a view to describe a GUI that changes according to the number of sound devices.

Referring to FIG. 10, the external sound device 200 may be composed of or include a plurality of sound devices 210, 211, and 212. The display apparatus 100 may provide a GUI including a visual effect corresponding to each of the plurality of sound devices 210, 211, and 212. For example, when there are three sound devices 210, 211, and 212, the display apparatus 100 may provide 3 GUIs 1010, 1011, and 1012 including the visual effects.

The display apparatus 100 may identify the number of external sound devices 200 connected to the display apparatus 100. In addition, a GUI including a visual effect may be provided based on the identified number of external sound devices 200. In addition, the display apparatus 100 may obtain size information of the plurality of sound apparatuses 210, 211, and 212, and may provide a plurality of GUIs including visual effects based on the size information of the plurality of sound apparatuses 210, 211, and 212. The display apparatus 100 may provide a plurality of GUIs 1010, 1011, and 1012 having the same size as (or respectively scaled to) each of the plurality of sound devices 210, 211, and 212. For example, the display apparatus 100 may provide a first GUI 1010 that has the same size as that of the first sound device 210, a second GUI 1011 that has the same size as the second sound device 211, and a third GUI 1012 that has the same size as the third sound device 212.

According to an embodiment, the plurality of GUIs 1010, 1011, and 1012 may be implemented in a form of dividing one GUI. The display apparatus 100 may divide the provided GUI 410 when (e.g., based on) there is one external sound device 200 by the number of external sound devices. In addition, the display apparatus 100 may provide each divided GUI to have the same size as (or scaled to) the plurality of sound apparatuses 210, 211, and 212.

According to another embodiment, the plurality of GUIs 1010, 1011, and 1012 may be the same type of GUIs. The display apparatus 100 may not divide the plurality of GUIs 1010, 1011, and 1012 and provide GUIs only in different sizes. The display apparatus 100 may identify the sizes of the plurality of external sound devices 210, 211, and 212, and provide the GUIs corresponding to each of the identified sizes.

According to still another embodiment, the plurality of GUIs 1010, 1011, and 1012 may be implemented in different formats.

An operation of providing the GUIs including the visual effect according to the number of the plurality of external sound devices may have the effect of intuitively displaying the number of external sound devices.

FIG. 11 is a view to describe an embodiment in which a GUI 410 displayed according to a movement of a sound device 200 moves as well.

Referring to FIG. 11, the display apparatus 100 may identify a position of the external sound device 200, and the display apparatus 100 may display the GUI 410 including the visual effect on the display 110 corresponding to the identified position.

According to an embodiment, it is assumed that the external sound device 200 is disposed on the lower left side of the display apparatus 100. Here, the display apparatus 100 may display the GUI 410 including visual effects on the lower left side of the display 110 in consideration of the position of the external sound device 200. In addition, it is assumed that the external sound device 200 has moved to the lower right side of the display apparatus 100 by the user. The display apparatus 100 may identify that the external sound device 200 is disposed at the lower right side, and the display apparatus 100 may display the GUI 410 including the visual effect on the lower right side of the display 110.

According to still another embodiment, the display apparatus 100 may identify the display apparatus 100 at predetermined intervals, and may display a path along which the GUI 410 including visual effects moves, based on the movement path of the display apparatus 100. For example, if the display apparatus 100 identifies that the user moves the external sound device 200 from the lower left side of the display apparatus 100 to the lower right side, the display apparatus 100 may display the GUI 410 including the visual effect as moving from the lower left to the lower right (e.g., via an animation).

The operation of providing the GUI 410 including the visual effect on an area corresponding to the identified position by identifying the position of the external sound device 200 may have the effect to easily identify a position of the external sound device 200, and have the effect to easily identify the movement of the speaker.

FIG. 12 is a view to describe an operation to display by a display apparatus 100 a guide UI 1205 for guiding an arrangement position according to still another embodiment.

Referring to FIG. 12, the display apparatus 100 may provide a guide UI 1205 for guiding an arrangement position of the external sound device 200. The guide UI 1205 may refer to various types of Uls that are displayed to display an arrangement position (or a recommended arrangement position) of the external sound device 200.

Here, the arrangement position may be a suitable or ideal position where the external sound device 200 should be arranged. Where to place the external sound device 200 may be a user's choice. However, an arrangement position suitable or ideal for the external sound device 200 may exist and the display apparatus 100 may provide the guide UI 1205 for guiding the suitable arrangement position to the user. Information related to the arrangement position corresponding to the external sound device 200 may be received through the external sound device 200 or an external server. Meanwhile, the arrangement position suitable for the external sound device 200 may vary depending on the type of display apparatus 100.

According to an embodiment, the guide UI 1205 may be an image that guides the external sound device 200, and the image of which at least one of the size or the shape of the external sound device 200 is the same (or scaled accordingly). Here, the information on the size and the shape of the external sound device 200 may be received from the external server or the external sound device 200.

According to another embodiment, the guide UI 1205 may be an image that may not have the same size or shape as the external sound device 200, but may be an image from which an arrangement position of the external sound device 200 may be identified.

When there is a plurality of external sound devices 200, there may be a plurality of the guide Uls 1205. For example, when (e.g., based on) the external sound device 200 is composed of the first speaker and the second speaker, the display apparatus 100 may display a first image corresponding to the first speaker at a first position and a second image corresponding to the second speaker at a second position.

The guide UI 1205 has been described as displaying only the image, but the guide UI may be implemented in the form of displaying additional information corresponding to the actual external sound device 200 as well. The guide UI 1205 may additionally display information such as at least one of a type of speaker, a model name, a left and right speaker, or the like. For example, if the display apparatus 100 assumes that the external sound device 200 is composed of a left speaker and a right speaker, the display apparatus 100 may provide an image of the left speaker and text information of "LEFT," and an image of the right speaker and text information "RIGHT."

There may be a situation in which the appropriate arrangement position (recommended arrangement position) of the external sound device 200 is the left side or the right side of the TV, not the lower part of the TV, or a specific position in the three-dimensional space. It may be difficult to display an image that is the same as the size of the external sound device 200. Therefore, the display apparatus 100 may determine whether a suitable or ideal arrangement position of the external sound device 200 is in the adjacent range of the TV. In addition, the display apparatus 100 may display a brief drawing illustrating the peripheral space, an image of the display apparatus 100, and an image of the external sound device 200 when the suitable arrangement position of the external sound device 200 is not an adjacent range of the TV. The displayed images may be displayed in a smaller size than the images of the actual display apparatus 100 and the external sound device 200.

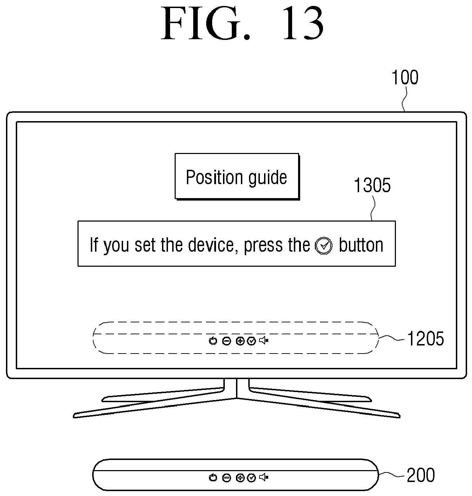

FIG. 13 is a view to describe an embodiment of requesting a specific operation to a user when an arrangement is completed according to the guide UI.

Referring to FIG. 13, the display apparatus 100 may provide a UI 1305 asking whether the arrangement of the external sound device 200 is completed. When the user inputs a predetermined button (e.g., OK button) according to the provided UI 1305, the display apparatus 100 may determine that the arrangement of the external sound device 200 is completed, and perform a next operation.

FIG. 14 is a view to describe an embodiment of displaying a virtual image on a display position corresponding to a position of the sound device 200.

Referring to FIG. 14, the display apparatus 100 may provide a first guide UI 1205 and a second guide UI 1405. Here, the first guide UI 1205 may be a UI that displays a suitable or ideal arrangement position of the external sound device 200, and the second guide UI 1405 is a UI that shows the current position of the external sound device 200 in real time. The displayed position of the second guide UI 1405 may be changed based on the position of the external sound device 200. For example, when the external sound device 200 moves from left to right by the user, the display apparatus 100 may control the guide UI 1405 to move from left to right.

The operation of changing the position of the guide UI 1405 according to the movement of the external sound device 200 may have the effect of assisting the user to easily find a suitable arrangement position of the external sound device 200.

FIG. 14 illustrates that the first guide UI 1205 and the second guide UI 1405 are displayed at the same time, but in some cases or one or more other embodiments, it may only the second guide UI 1405 may be displayed.

FIG. 15 is a view to describe an embodiment of displaying a UI 1505 indicating that the display apparatus 100 is performing the space analysis operation according to still another embodiment.

Referring to FIG. 15, the display apparatus 100 may perform the space analysis using the external sound device 200.

The space analysis may refer to analyzing characteristics of the peripheral space in which the display apparatus 100 or the external sound device 200 is installed. The characteristics of the peripheral space may refer to information related to the space that may be considered in outputting the sound. For example, the characteristic of the peripheral space may be space information, and may be the size of the space, the structure of the space, the number of people in the space, or the like.

The external sound device 200 may perform the space analysis, and the display apparatus 100 may display the UI 1505 indicating that the space analysis is being performed on the display 110. The user, while viewing the UI 1505, may recognize that the space analysis is being performed.

According to an embodiment, the UI 1505 may be an image that is displayed based on actual information that is obtained through the analysis regarding the peripheral space. According to another embodiment, the UI 1505 may be a prestored image.

FIG. 16 is a view to describe a detailed setting of the sound device 200.

Referring to FIG. 16, the display apparatus 100 may adjust the output setting of the external sound device 200 based on the information on the space analysis. To be specific, the external sound device 200 may include a Tweeter corresponding to a high pitch (shown as TW in FIG. 16), a midrange pitch corresponding to a midrange (shown as Mid in FIG. 16), and a woofer corresponding to a low pitch (shown as Bass in FIG. 16), and each setting may be different. In addition, when there is a plurality of speaker units, the display apparatus 100 may divide the units into left and right sides, and may differentiate settings of a left speaker and a right speaker.

The display apparatus 100 may control the detailed output settings of the external sound device 200 described above differently, and may display each setting by the UI 1605. The UI 1605 displays the current output setting of the display apparatus 100, and the display apparatus 100 may guide the user to directly change the setting through the UI 1605. When the user changes the output setting using the UI 1605, the display apparatus 100 may display a process and a result of changing the output setting on the display 110.

The display apparatus 100 may display a process and a result of adjusting the equalizer function through the UI. The equalizer may be a device that corrects distortion by changing frequency characteristics of an audio signal. The equalizer may emphasize or reduce specific frequency bands in audio signals, and the equalizer may be used to adjust and improve the overall sound quality.

In describing FIG. 16, the frequency band has been divided by three (TW, Mid, and Bass), but the band may be divided into three or more bands according to necessity.

FIG. 17 is a flowchart to describe an operation of receiving a test audio signal and space analysis according to an embodiment.

Referring to FIG. 17, the display apparatus 100 may identify a request for analyzing space information based on a user's input in operation S1705. The display apparatus 100 may transmit, to the external sound device 200, a control command requesting to output the test audio signal according to the identified request in operation S1710. The external sound device 200 may output a test audio signal based on the received control command in operation S1715.

Accordingly, the external sound device 200 may receive the test audio signal reflected through a microphone in operation S1720. Here, although it is expressed that the reflected test audio signal is received, the external sound device 200 may actually receive the reflected test audio signal and the non-reflected test audio signal together. However, since it is the reflected test audio signal that is used for the actual space analysis, the reflected test audio signal is described as being received in the drawing.

The external sound device 200 may transmit the received test audio signal to the display apparatus 100 in operation S1725. The display apparatus 100 may perform the space analysis based on the information received from the external sound device 20 in operation S1730.

The display apparatus 100 may transmit the space analysis result to the external sound device 200 in operation S1735. The external sound device 200 may change the detailed setting of the external sound device 200 based on the received space analysis result in operation S1740.

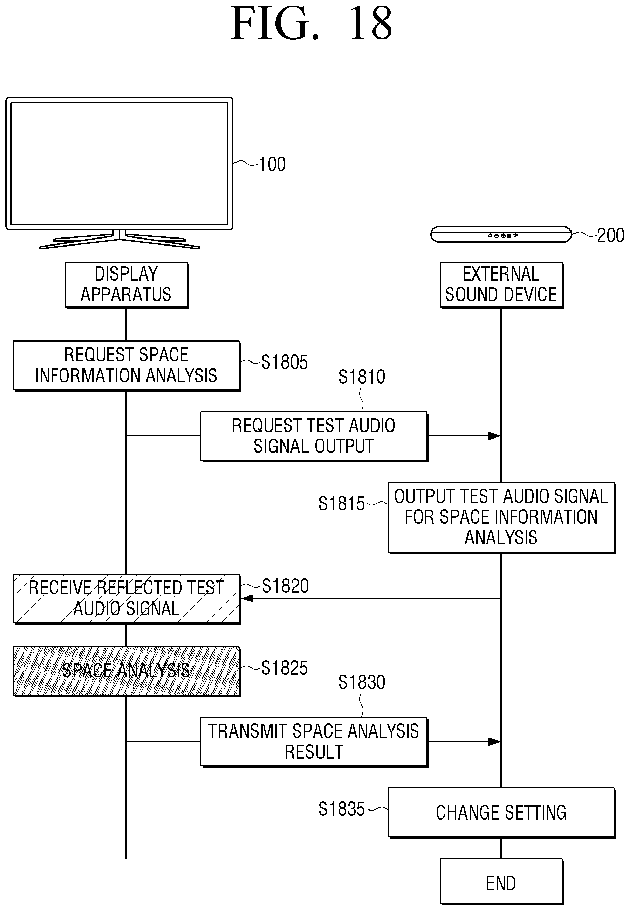

FIG. 18 is a flowchart to describe an operation of receiving a test audio signal and space analysis according to another embodiment.

Referring to FIG. 18, the display apparatus 100 may identify a request for analyzing space information based on a user's input in operation S1805. The display apparatus 100 may transmit, to the external sound device 200, a control command requesting to output the test audio signal according to the identified request in operation S1810. Accordingly, the external sound device 200 may output a test audio signal based on the received control command in operation S1815.

The display apparatus 100 may receive the test audio signal (e.g., reflected test audio signal) through a microphone in operation S1820. The display apparatus 100 may perform the space analysis using the test audio signal in operation S1825.

The display apparatus 100 may transmit the space analysis result to the external sound device 200 in operation S1830. The external sound device 200 may change a detailed setting of the external sound device 200 based on the received space analysis result in operation S1835.

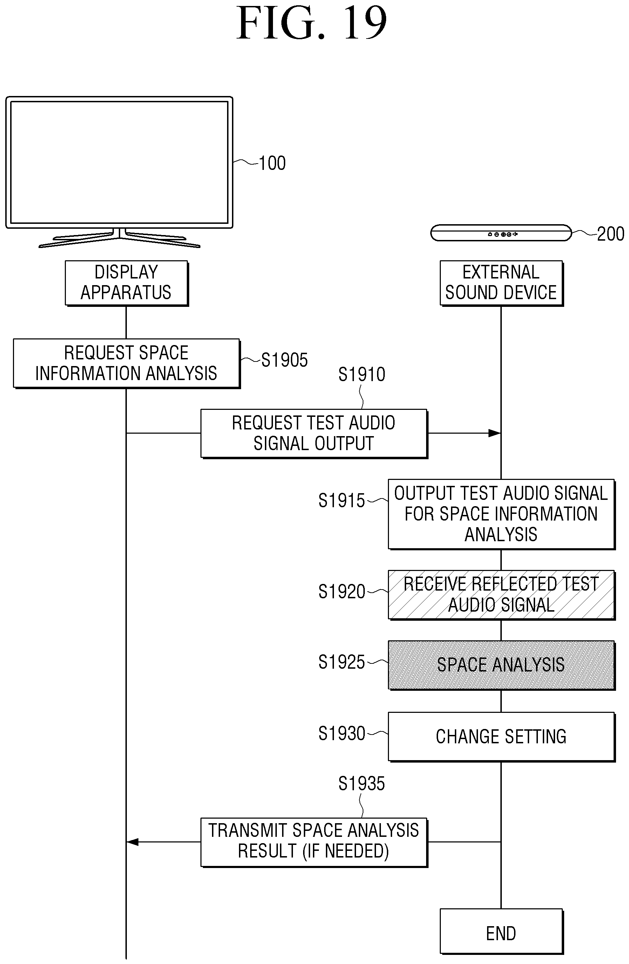

FIG. 19 is a flowchart to describe an operation of receiving a test audio signal and space analysis according to still another embodiment.

Referring to FIG. 19, the display apparatus 100 may identify a request for analyzing space information based on a user input in operation S1905. The display apparatus 100 may transmit, to the external sound device 200, a control command requesting to output a test audio signal according to the identified request in operation S1910. The external sound device 200 may output a test audio signal based on the received control command in operation S1915.

In addition, the external sound device 200 may receive the reflected test audio signal in operation S1920. The external sound device 200 may perform space analysis based on the reflected test audio signal in operation S1925. The external sound device 200 may change detailed settings of the external sound device 200 based on the space analysis result in operation S1930.

The external sound device 200 may transmit information on the space analysis result to the display apparatus 100 in operation S1935. The display apparatus 100 may receive the space analysis result from the external sound device 200 and may provide various Uls according to the space analysis. Meanwhile, the operation S1935 may not be always performed, and may be performed only when space information is needed in the display apparatus 100.

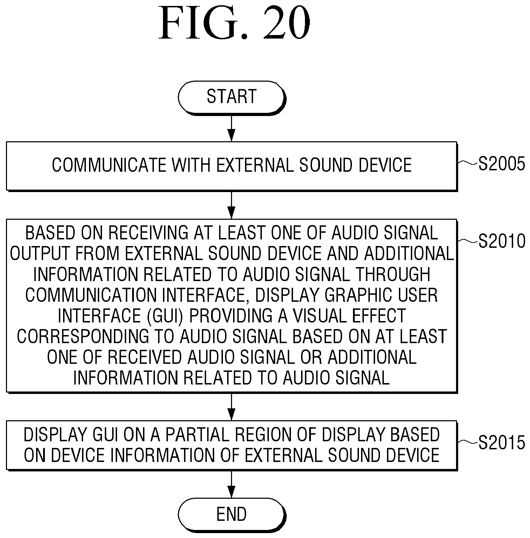

FIG. 20 is a flowchart illustrating a controlling method of a display apparatus 100 according to an embodiment.

Referring to FIG. 20, the controlling method of the display apparatus 100 according to an embodiment may perform communication with the external sound device 200 in operation S2005. In addition, in the controlling method of the display apparatus 100, when (e.g., based on) at least one of the additional information related to the audio signal or the audio signal output from the external sound device 200 is received, a GUI providing a visual effect corresponding to the audio signal may be displayed based on at least one of the additional information related to the audio signal or the received audio signal in operation S2010. Here, in operation S2010 of displaying the GUI, the GUI may be displayed in a partial region of the display based on the device information of the external sound device 200 in operation S2015.

The device information may include at least one of size information or shape information of the external sound device 200.

Meanwhile, in operation S2010 of displaying the GUI, when (e.g., based on) an event for changing the display mode of the GUI is generated or determined, the size of an area where the GUI is displayed is changed. The event for changing the display mode of the GUI may include at least one of an event in which a user command for changing the GUI is input or an event in which information about a space in which the external sound device 200 is disposed is changed.

The displaying the GUI in operation S2010 may include displaying the GUI in different shapes based on at least one of the waveform of the received audio signal, frequency of the received audio signal, or additional information of the audio signal, and the waveform or frequency of the audio signal may be obtained by analyzing the received audio signal.

In addition, the controlling method of the display apparatus 100 may further include, when (e.g., based on) an event for setting an arrangement position of the external sound device 200 is generated, displaying the guide UI for guiding the arrangement position of the external sound device 200 in a partial region of the display. The guide UI may include a first guide image corresponding to the device information of the external sound device 200.

Here, the displaying of the guide UI may identify an arrangement position of the external sound device 200 based on sensing information received through the communication interface 120, and may display the second guide image corresponding to the device information of the external sound device 200 at a partial region of the display corresponding to the identified arrangement position.

If (e.g., based on) the test audio signal output from the external sound device 200 is received through at least one of the external microphone or the internal microphone, the controlling method of the display apparatus 100 may further include acquiring, by the external sound device 200, the arranged space information based on the output test audio signal and the received test audio signal, and displaying a GUI indicating that the space is being analyzed while acquiring the space information.

Here, the controlling method of the display apparatus 100 may further include transmitting the obtained space information to the external sound device 200 through the communication interface 120 and, when (e.g., based on) the output setting information is adjusted based on the space information in the external sound device 200, displaying the GUI indicating an adjustment state of the output setting information.

The displaying the GUI in step S2010 may include displaying the GUI in an ambient mode to provide only some elements including the display and the communication interface 120.

The methods according to the various embodiments as described above may be implemented as an application format installable in an existing electronic device (display apparatus 100).

The methods according to the various embodiments as described above may be implemented as software upgrade or hardware upgrade for an existing electronic device.

The various embodiments described above may be performed through an embedded server provided in an electronic device (display apparatus 100), or an external server of at least one electronic device and a display device.

Meanwhile, various embodiments may be implemented in software, including instructions stored on machine-readable storage media readable by a machine (e.g., a computer). An apparatus may call instructions from the storage medium, and execute the called instruction, including an electronic apparatus (for example, the display apparatus 100) according to the disclosed embodiments. When the instructions are executed by a processor (e.g., at least one processor), the processor may perform a function corresponding to the instructions directly or by using other components under the control of the processor. The instructions may include a code generated by a compiler or a code executable by an interpreter. A machine-readable storage medium may be provided in the form of a non-transitory storage medium. Herein, the term "non-transitory" only denotes that a storage medium is tangible, and does not distinguish the case in which a data is semi-permanently stored in a storage medium from the case in which a data is temporarily stored in a storage medium.

According to an embodiment, the method according to the above-described embodiments may be included in a computer program product. The computer program product may be traded as a product between a seller and a consumer. The computer program product may be distributed online in the form of machine-readable storage media (e.g., compact disc read only memory (CD-ROM)) or through an application store (e.g., PLAYSTORE™) or distributed online directly. In the case of online distribution, at least a portion of the computer program product may be at least temporarily stored or temporarily generated in a server of the manufacturer, a server of the application store, or a machine-readable storage medium such as memory of a relay server.

According to embodiments, the respective elements (e.g., module or program) mentioned above may include a single entity or a plurality of entities. According to embodiments, at least one element or operation from among the corresponding elements mentioned above may be omitted, or at least one other element or operation may be added. Alternatively or additionally, a plurality of components (e.g., module or program) may be combined to form a single entity. In this case, the integrated entity may perform functions of at least one function of an element of each of the plurality of elements in the same manner as or in a similar manner to that performed by the corresponding element from among the plurality of elements before integration. The module, a program module, or operations executed by other elements according to variety of embodiments may be executed consecutively, in parallel, repeatedly, or heuristically, or at least some operations may be executed according to a different order, may be omitted, or the other operation may be added thereto.

## Claims

1. A display apparatus comprising:
a display;
a communication interface; and
a processor configured to:
control the communication interface to communicate with an external sound device, and
based on receiving, through the communication interface, at least one of an audio signal that is output from the external sound device or additional information related to the audio signal, control the display to display a graphic user interface (GUI) providing a visual effect that corresponds to the audio signal based on at least one of the audio signal or the additional information related to the audio signal,
wherein the processor is configured to control the display to display the GUI on a partial region of the display based on device information of the external sound device.

2. The display apparatus of claim 1, wherein the device information comprises at least one of size information of the external sound device or shape information of the external sound device.

3. The display apparatus of claim 1, wherein:
the processor is further configured to, based on an event to change a display mode of the GUI occurring, change a size of the partial region in which the GUI is displayed; and
the event to change the display mode of the GUI comprises at least one of an event in which a user command to change the display mode is input or an event in which information on a space in which the external sound device is arranged is changed.

4. The display apparatus of claim 1, wherein:
the processor is further configured to control the display to display the GUI with a shape variably determined based on at least one of a waveform of the received audio signal, a frequency of the received audio signal, or the additional information related to the audio signal; and
the waveform of the received audio signal or the frequency of the audio signal are obtained by analyzing the received audio signal.

5. The display apparatus of claim 1, wherein:
the processor is further configured to, based on an event to set an arrangement position of the external sound device, control the display to display a guide UI for guiding the arrangement position of the external sound device; and
the guide UI comprises a first guide image that corresponds to the device information of the external sound device.

6. The display apparatus of claim 5, wherein the processor is further configured to:
identify the arrangement position of the external sound device based on sensing information received through the communication interface; and
control the display to display a second guide image that corresponds to the device information of the external sound device on a partial region of the display that corresponds to the identified arrangement position.

7. The display apparatus of claim 1, wherein the processor is further configured to:
based on a test audio signal that is output from the external sound device being received through at least one of an external microphone or an internal microphone, obtain information of a space in which the external sound device is arranged based on the output test audio signal and the received test audio signal; and
control the display to display a GUI indicating that the space is being analyzed while the space information is obtained.

8. The display apparatus of claim 7, wherein the processor is further configured to:
transmit the obtained space information to the external sound device through the communication interface; and
based on output setting information being adjusted in the external sound device according to the space information, control the display to display a GUI indicating an adjustment state of the output setting information.

9. The display apparatus of claim 1, wherein the processor is further configured to control the display to display the GUI in an ambient mode to supply power to only some components, including the display and the communication interface, of the display apparatus.

10. The display apparatus of claim 1, wherein the processor is further configured to:
control the communication interface to communicate with a plurality of external sound devices; and
control the display to display a plurality of GUIs that respectively correspond to the plurality of external sound devices in different partial regions of the display based on device information of each of the plurality of external sound devices.

11. The display apparatus of claim 1, wherein the processor is further configured to:
identify an arrangement position of the external sound device based on sensing information received through the communication interface; and
control the display to display the GUI in the partial region of the display that corresponds to the identified arrangement position.

12. A controlling method of a display apparatus, the method comprising:
receiving, from an external sound device, at least one of an audio signal output by the external sound device or additional information related to the audio signal; and
displaying a graphic user interface (GUI) providing a visual effect that corresponds to the audio signal based on at least one of the audio signal or the additional information related to the audio signal,
wherein the displaying the GUI comprises displaying the GUI on a partial region of a display based on device information of the external sound device.

13. The method of claim 12, wherein the device information comprises at least one of size information of the external sound device or shape information of the external sound device.

14. The method of claim 12, wherein:
the displaying the GUI comprises, based on an event to change a display mode of the GUI occurring, changing a size of the partial region in which the GUI is displayed; and
the event to change the display mode of the GUI comprises at least one of an event in which a user command to change the display mode is input or an event in which information on a space in which the external sound device is arranged is changed.

15. The method of claim 12, wherein:
the displaying the GUI comprises displaying the GUI with a shape variably determined based on at least one of a waveform of the audio signal, a frequency of the audio signal, or the additional information related to the audio signal; and
the waveform of the audio signal or the frequency of the audio signal are acquired by analyzing the audio signal.

## Amended claims

### Amended claims in accordance with Rule 137(2) EPC.

1. A display apparatus (100) comprising:
a display (110);
a communication interface (120); and
a processor (130) configured to:
control the communication interface to communicate with an external sound device (200), and
based on receiving, through the communication interface, at least one of an audio signal that is output from the external sound device or additional information related to the audio signal, control the display to display a graphic user interface (GUI) providing a visual effect that corresponds to the audio signal based on at least one of the audio signal or the additional information related to the audio signal,
wherein the processor is configured to:
control the display to display the GUI on a partial region of the display based on device information of the external sound device,
identify a position of the external sound device (200), and
control the display to display the GUI on a region of the display corresponding to the identified position.

2. The display apparatus of claim 1, wherein the device information comprises at least one of size information of the external sound device or shape information of the external sound device.

3. The display apparatus of claim 1, wherein:
the processor is further configured to, based on an event to change a display mode of the GUI occurring, change a size of the partial region in which the GUI is displayed; and
the event to change the display mode of the GUI comprises at least one of an event in which a user command to change the display mode is input or an event in which information on a space in
which the external sound device is arranged is changed.

4. The display apparatus of claim 1, wherein:
the processor is further configured to control the display to display the GUI with a shape variably determined based on at least one of a waveform of the received audio signal, a frequency of the received audio signal, or the additional information related to the audio signal; and
the waveform of the received audio signal or the frequency of the audio signal are obtained by analyzing the received audio signal.

5. The display apparatus of claim 1, wherein:
the processor is further configured to, based on an event to set an arrangement position of the external sound device, control the display to display a guide UI for guiding the arrangement position of the external sound device; and
the guide UI comprises a first guide image that corresponds to the device information of the external sound device.

6. The display apparatus of claim 5, wherein the processor is further configured to:
identify the arrangement position of the external sound device based on sensing information received through the communication interface; and
control the display to display a second guide image that corresponds to the device information of the external sound device on a partial region of the display that corresponds to the identified arrangement position.

7. The display apparatus of claim 1, wherein the processor is further configured to:
based on a test audio signal that is output from the external sound device being received through at least one of an external microphone or an internal microphone, obtain information of a space in which the external sound device is arranged based on the output test audio signal and the received test audio signal; and
control the display to display a GUI indicating that the space is being analyzed while the space information is obtained.

8. The display apparatus of claim 7, wherein the processor is further configured to:
transmit the obtained space information to the external sound device through the communication interface; and
based on output setting information being adjusted in the external sound device according to the space information, control the display to display a GUI indicating an adjustment state of the output setting information.

9. The display apparatus of claim 1, wherein the processor is further configured to control the display to display the GUI in an ambient mode to supply power to only some components,
including the display and the communication interface, of the display apparatus.

10. The display apparatus of claim 1, wherein the processor is further configured to:
control the communication interface to communicate with a plurality of external sound devices; and
control the display to display a plurality of GUIs that respectively correspond to the plurality of external sound devices in different partial regions of the display based on device information of each of the plurality of external sound devices.

11. The display apparatus of claim 1, wherein the processor is further configured to:
identify an arrangement position of the external sound device based on sensing information received through the communication interface; and
control the display to display the GUI in the partial region of the display that corresponds to the identified arrangement position.

12. A controlling method of a display apparatus (100), the method comprising:
receiving, from an external sound device (200), at least one of an audio signal output by the external sound device or additional information related to the audio signal; and
displaying a graphic user interface (GUI) providing a visual effect that corresponds to the audio signal based on at least one of the audio signal or the additional information related to the audio signal,
wherein the displaying the GUI comprises:
displaying the GUI on a partial region of a display based on device information of the external sound device,
identifying a position of the external sound device (200), and
displaying the GUI on a region of the display corresponding to the identified position.

13. The method of claim 12, wherein the device information comprises at least one of size information of the external sound device or shape information of the external sound device.

14. The method of claim 12, wherein:
the displaying the GUI comprises, based on an event to change a display mode of the GUI occurring, changing a size of the partial region in which the GUI is displayed; and
the event to change the display mode of the GUI comprises at least one of an event in which a user command to change the display mode is input or an event in which information on a space in which the external sound device is arranged is changed.

15. The method of claim 12, wherein:
the displaying the GUI comprises displaying the GUI with a shape variably determined based on at least one of a waveform of the audio signal, a frequency of the audio signal, or the additional information related to the audio signal; and
the waveform of the audio signal or the frequency of the audio signal are acquired by analyzing the audio signal.
